Europäisches Patentamt

European Patent Office

Office européen des brevets

(19)

(11) Numéro de publication: **0 140 747**
**B1**

# FASCICULE DE BREVET EUROPEEN

(12)

(45) Date de publication du fascicule du brevet:
**20.04.88**

(51) Int. Cl.⁴: **G 01 F 23/24,** G 01 K 7/22,
G 01 K 7/18

(21) Numéro de dépôt: **84401857.2**

(22) Date de dépôt: **19.09.84**

(54) Perfectionnements aux sondes de mesure de niveau.

(30) Priorité: **21.09.83  FR 8314990**

(43) Date de publication de la demande:
**08.05.85 Bulletin 85/19**

(45) Mention de la délivrance du brevet:
**20.04.88 Bulletin 88/16**

(84) Etats contractants désignés:
**DE FR GB IT**

(56) Documents cités:
**EP - A - 0 009 252**
**EP - A - 0 112 783**
**WO - A - 80/00191**
**DE - A - 3 117 957**
**GB - A - 2 094 983**

**Int. Cl.4 (4e édition, 1984) Vol.8, Section H, page 136**

(73) Titulaire: **JAEGER, 2, rue Baudin,
F-92303 Levallols-Perret (FR)**

(72) Inventeur: **Dombrovsky, Daniel Serge Maurice, 58, rue
Sartoris, F-92250 La Garenne Colombes (FR)**
Inventeur: **Lanson, Jean-Michel François, 32, Route
Nationale 13 Méricourt, F-78270 Bonnieres Sur Seine
(FR)**
Inventeur: **Mouchet, Bernard André, 12, Allée de
Fontainebleau, F-75019 Paris (FR)**

(74) Mandataire: **Martin, Jean-Jacques et al, Cabinet
REGIMBEAU 26, Avenue Kléber, F-75116 Paris (FR)**

ACTORUM AG

## Description

La présente invention concerne les sondes de mesure de niveau d'un liquide contenu dans un réservoir, par exemple un réservoir de véhicule automobile.

Plus précisément, l'invention concerne les sondes comportant un élément détecteur constitué par un conducteur résistif à fort coefficient de température destiné à être immergé dans le liquide, et des moyens de liaison électrique reliant cet élément à un connecteur relativement éloigné.

Le principe de mesure de telles sondes est simple: un élément métallique résistif ayant un coefficient de température élevé voit sa résistance propre augmenter sensiblement en fonction de sa température. De plus, lorsqu'un tel élément résistif est plongé dans un liquide, sa résistance propre dépend du niveau de liquide puisque la partie de l'élément résistif disposée au-dessus du liquide, et donc exposée à l'air, est bien moins refroidie que la partie immergée. Dans ces conditions, la mise en circuit électrique d'un tel élément servant de détecteur fournit un moyen de mesure du niveau.

A titre d'exemple, un circuit particulier est décrit dans le brevet français n° 76 30120 du 6 octobre 1976, publié sous le n° 2 367 276 au nom de la Demanderesse.

Deux structures de sondes sont actuellement disponibles sur le marché.

Une structure présente, comme élément détecteur, un fil de matériau résistif à fort coefficient de température bobiné en spirale et comme élément conducteur deux fils de liaisons en cuivre, ces fils étant respectivement protégés par un capuchon et par une gaine semi-rigide reliés l'un à l'autre par un système à vis.

Une autre structure, telle celle décrite dans la demande de brevet français n° 82 04050 publiée sous le n° 2 501 860, comporte une bande détectrice disposée sur un substrat formant circuit imprimé, reliée par des fils de liaison à un circuit de traitement. Une telle structure, comme celle décrite précédemment exige des moyens de protection du circuit imprimé ainsi que des fils de liaison.

Le prix de revient de ces sondes est relativement élevé en raison du mode de fabrication exigé par de tels composants, l'assemblage se faisant d'une manière individuelle et manuelle.

Les composants utilisés ont de plus un encombrement non négligeable ce qui, compte tenu des emplacements d'utilisation exigus, représente un inconvénient certain.

La présente invention vient remédier à ces inconvénients et propose à cet effet une nouvelle structure de sonde correspondant à la revendication 6 ainsi qu'un nouveau procédé de fabrication correspondant à la revendication 1.

La nouvelle sonde selon l'invention comporte un support plan allongé sur lequel est fixé un circuit imprimé présentant sur un même substrat des pistes de deux matériaux, l'un à fort coefficient de température, afin de former l'élément détecteur d'une part, et les moyens de liaison d'autre part.

Afin de réaliser une telle sonde, l'invention propose en outre un procédé de fabrication selon lequel:

– on associe à un même substrat isolant deux feuilles conductrices adjacentes de matériaux différents, l'un à fort coefficient de température afin de former respectivement une zone détectrice et une zone de liaison,

– on grave de façon simultanée ces deux zones afin d'obtenir des pistes de circuit imprimé à l'aide d'un mélange d'agents chimiques, les proportions et concentrations de ces agents permettant d'ajuster les vitesses de gravure de chaque zone en fonction de leur nature et de leur épaisseur;

– on réalise de cette façon une pluralité de circuits imprimés disposés en bandes parallèles répétitives, chaque circuit comportant une piste détectrice et deux pistes de liaison;

– on assemble le film ainsi réalisé à un support plan allongé que l'on découpe selon la limite des bandes parallèles afin d'obtenir une pluralité de sondes.

Cette nouvelle structure de sonde ainsi que son procédé de fabrication permettent, car ils éliminent l'emploi de fils de liaison reliant l'élément détecteur à un connecteur et autorisent une fabrication en grande série ne nécessitant pas d'opérations manuelles, d'abaisser de façon importante le prix de revient unitaire de chaque sonde.

D'autres caractéristiques et avantages de l'invention apparaîtront au cours de la description qui va suivre et sur les dessins annexés auxquels elle fait référence.

Sur ces dessins, les Figures 1, 2, 3 et 4 illustrent différentes phases de la fabrication des sondes dans un mode de réalisation préféré donné à titre d'exemple; sur toutes les figures, les mêmes références désignent les mêmes éléments. Plus précisément:

– la figure 1 est une vue de dessus du substrat recevant les feuilles conductrices formant les zones détectrice et de liaison;

– la figure 2 montre, en une vue analogue à la précédente, la réalisation des circuits imprimés;

– la figure 3 représente en une vue de côté l'assemblage du film et du support;

– la figure 4 représente en perspective, une sonde selon l'invention obtenue par découpage de l'assemblage précité.

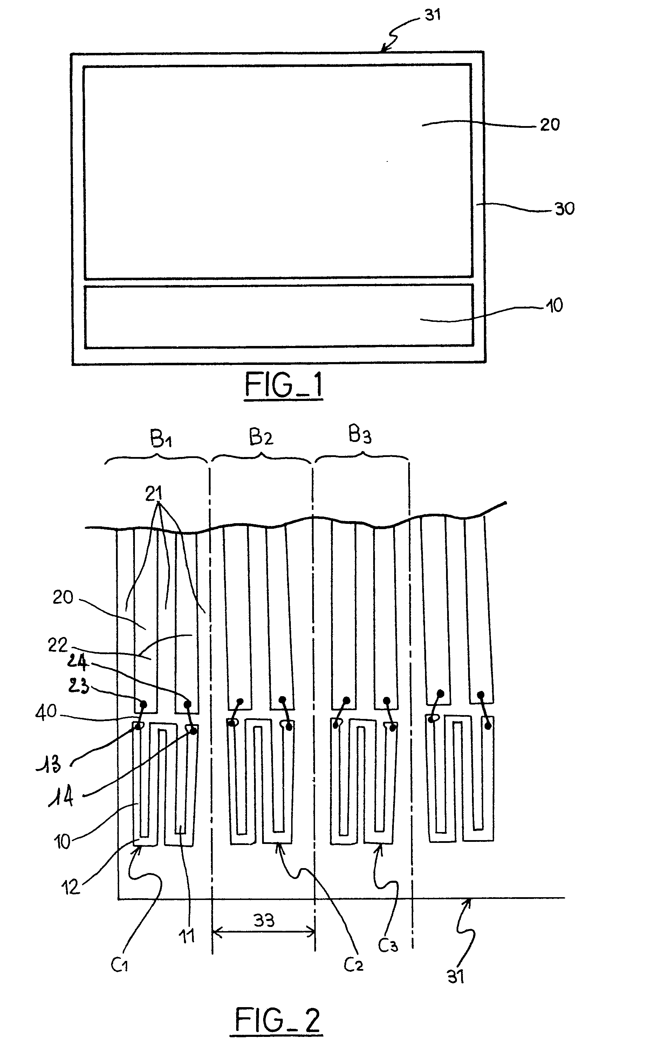

Selon l'invention, et comme le montre la figure 1, on réalise d'abord un film souple 31 en associant à un substrat isolant 30 une feuille 10 d'un élément conducteur détecteur résistif à fort coefficient de température et une feuille 20 d'un élément conducteur de liaison électrique.

Dans un exemple typique, le substrat 30 est une pellicule en poly-imide de 50 μm d'épaisseur, la feuille 10 est en un alliage nickel-cobalt-fer et a une épaisseur de 17 μm et la feuille 20 est en cuivre et a une épaisseur de 35 μm.

L'assemblage de ces éléments (10, 20, 30) se fait par chauffage et pressage, en interposant entre le substrat 30 et les feuilles 10 et 20 une pellicule acrylique formant liant. On obtient un film souple 31 portant deux zones adjacentes 10 et 20.

On dépose ensuite sur ce film 31 une pellicule photosensible recouvrant les zones 10 et 20. On isole cette pellicule suivant un masque reproduisant le dessin des circuits imprimés à réaliser avec le pas de répétition 33 nécessaire.

Comme le montre la figure 2, on élimine par gravure chimique les zones 11, 21, non protégées par le masquage, des deux zones détectrice et de liaison 10 et 20. Cette gravure fait intervenir l'attaque simultanée de deux agents chimiques, l'acide nitrique et le perchlorure de fer, dont les concentrations et les proportions permettent d'ajuster les vitesses de gravure des zones détectrice 10 et de liaison 20 en fonction de leur nature et de leur épaisseur respective afin d'obtenir sensiblement au même instant l'élimination totale des zones non protégées.

Comme on le voit sur la figure 2, on obtient finalement une pluralité de circuits imprimés $C_1$, $C_2$, $C_3$... disposés selon des bandes parallèles $B_1$, $B_2$, $B_3$..., chaque circuit comportant une partie détectrice 12 et une partie de liaison 22. Dans l'exemple représenté, la partie détectrice 12 de chaque circuit $C_1$, $C_2$, $C_3$,... a la forme d'une piste présentant de multiples créneaux entre les bornes 13 et 14, et la partie de liaison 22 a la forme de deux pistes parallèles partant des bornes 23 et 24. On associe les parties détectrice 12 et de liaison 22 de chaque circuit $C_1$, $C_2$, $C_3$,... en reliant par des fils soudés les bornes 13 et 23 ainsi que les bornes 14 et 24.

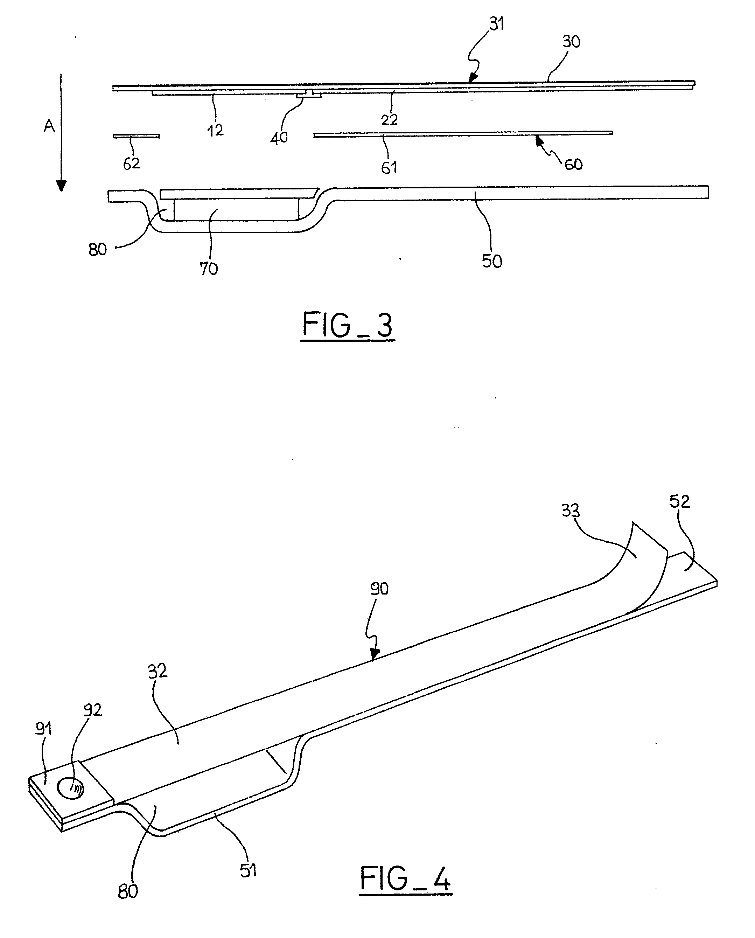

Comme le montre la figure 3, on associe ensuite le film 31 à une plaque-support 50 en laminé d'acier inoxydable de 0,8 mm d'épaisseur. Cette plaque 50 présente dans sa partie faisant face à la partie détectrice 12 un évidement 80, ceci afin d'éviter tout contact entre ladite partie détectrice 12 et la plaque 50. Un élément liant (pellicule acrylique) 60 est disposé de part et d'autre (régions 61 et 62) dudit évidement 80 entre la plaque 50 et le film 31. L'assemblage s'effectue par pressage suivant le sens A, la face du film 31 comportant les parties détectrices 12 et de liaison 22 étant appliquée contre la plaque 50.

On découpe ensuite l'ensemble obtenu suivant les limites de chacun des circuits imprimés $C_1$, $C_2$, $C_3$... à l'aide de, par exemple, un laser. On obtient une pluralité de sondes.

La figure 4 représente la sonde finalement obtenue. Elle comprend une bande 33 du film souple 31 comportant une partie détectrice et une partie de liaison associée à un support 52 dû à la découpe de la plaque 50. La sonde présente, dans la région correspondant à la partie détectrice 12 un évidement 80, le support 52 et la bande 33 formant respectivement à ce niveau un archet 51 et une corde 32 permettant la circulation du liquide dans ledit évidement 80. Toute incidence thermique entre la partie détectrice 12 et le support 52 ou une éventuelle goutte du liquide, maintenue par phénomène de capillarité entre l'archet 51 et la corde 32, est ainsi évitée. La corde 32 à la partie inférieure de la sonde 90 est fixée à l'archet 51 par une plaque 91 et un rivet 92; la bande 33 est laissée libre dans la partie supérieure de la sonde 90 afin de faciliter l'accès à la partie de liaison 22 pour son raccordement ou son branchement électrique.

Bien entendu, l'invention n'est pas limitée au mode de réalisation décrit.

En particulier le dessin de la partie détectrice 12 n'est pas limitatif, cette configuration en créneau n'étant qu'un exemple qui a l'avantage d'augmenter la sensibilité de l'élément résistif à fort coefficient de température, qui a une sensibilité qui augmente en fonction de sa longueur.

De même, le moyen de liaison des bornes (13, 23; 14, 24) des parties détectrice et de liaison n'est pas limitatif: les fils soudés peuvent être remplacés par des moyens de liaison par sérigraphie, par bonding ou autres.

La sonde selon l'invention s'applique particulièrement bien à la détection du niveau de réservoirs de véhicules automobiles, notamment le réservoir d'huile contenu dans le carter-moteur.

**Revendications**

1. – Procédé de fabrication d'une sonde de niveau d'un liquide contenu dans un réservoir du type comportant un élément détecteur constitué par un conducteur à fort coefficient de température et des moyens de liaison électrique permettant de relier l'élément détecteur à un connecteur, caractérisé par les étapes selon lesquelles:
– on associe à un même substrat isolant (30) deux feuilles conductrices adjacentes de matériau différents, l'un à fort coefficient de température, afin de former respectivement une zone détectrice (10) et une zone de liaison (20),
– on grave de façon simultanée ces deux zones (10, 20) afin d'obtenir des pistes (12, 22) de circuit imprimé à l'aide d'un mélange d'agents chimiques, les proportions et concentrations de ces agents permettant d'ajuster les vitesses de gravure de chaque zone (10, 20) en fonction de leur nature et de leur épaisseur;
– on réalise de cette façon une pluralité de circuits imprimés disposés en bandes parallèles répétitives, chaque circuit comportant une piste détectrice (12) et deux pistes de liaison (22);
– on assemble le film (31) ainsi réalisé à un support plan (50) allongé que l'on découpe selon la limite des bandes parallèles afin d'obtenir une pluralité de sondes.

2. – Procédé selon la revendication 1, caractérisé par le fait que:
– la zone détectrice (10) est en un alliage cobalt-nickel-fer;
– la zone de liaison (20) est en cuivre,
– le mélange d'agents chimiques comprend de l'acide nitrique et du perchlorure de fer.

3. – Procédé selon l'une des revendications 1 et 2, caractérisé par le fait que le film (31) est assemblé sur le support plan (50) par collage en interposant entre ledit film (31) et le support plan (50) un élément liant (60) par exemple une pellicule acrylique.

4. – Procédé selon l'une des revendications 1 à 3, caractérisé par le fait que la piste détectrice (12) portée par le substrat (30) se trouve en vis-à-vis d'un évidement (80) du support plan (50).

5. – Procédé selon l'une des revendications 1 à 4, caractérisé par le fait qu'on relie par des moyens soudés (40) la piste détectrice (12) et les pistes de liaison (22).

6. – Sonde de mesure de niveau d'un liquide contenu dans un réservoir de type comportant un élément détecteur constitué par un conducteur à fort coefficient de température destiné à être immergé dans le liquide et des moyens de liaison électrique permettant la liaison entre l'élément détecteur et un connecteur, caractérisée en ce qu'elle comporte un support plan allongé (50, 52) sur lequel est fixé un film circuit imprimé (31) présentant sur un même substrat isolant (30) des pistes de deux matériaux, l'un à fort coefficient de température, afin de former respectivement l'élément détecteur (12) et les moyens de liaison (22) électrique de la sonde, ledit support (52), dans sa partie se situant en vis-à-vis de l'élément détecteur (12), présentant un évidement (80), le support (52) et le film (31) formant à ce niveau respectivement un archet (51) et une corde (32), ceci afin d'éviter toute incidence thermique entre le support (52), ou une éventuelle goutte du liquide maintenue par phénomène de capillarité entre l'archet (51) et la code (32), et l'élément détecteur (12).

7. – Sonde selon la revendication 6, caractérisée en ce que la corde (32) sur la partie inférieure de la sonde est fixée à l'archet (51) par une plaque (91) et un rivet (92).

## Patentansprüche

1. Verfahren zur Herstellung einer Sonde für den Pegelstand einer in einem Behälter enthaltenen Flüssigkeit mit einem Fühlerelement, welches durch ein Leiterelement mit einem starken Temperaturkoeffizienten und durch elektrische Verbindungselemente gebildet ist, welche letztere die Verbindung des Fühlerelementes mit einem (Steck-)Verbinder ermöglichen, gekennzeichnet durch die folgenden Schritte:

– auf ein und dasselbe isolierende Substrat (30) werden zwei nebeneinander liegende leitende Folien aus unterschiedlichen Materialien aufgebracht, wovon das eine einen starken Temperaturkoeffizienten aufweist, um jeweils eine Fühlerzone (10) und eine Verbindungszone (20) zu schaffen,

– diese zwei Zonen (10, 20) werden gleichzeitig mit Hilfe einer Mischung chemischer Wirkstoffe geätzt, um Bahnen (12, 22) einer gedruckten Schaltung zu erhalten, wobei die Verhältnisse und Konzentrationen dieser Wirkstoffe eine Einstellung der Ätzgeschwindigkeiten für jede Zone (10, 20) in Abhängigkeit von ihrer Beschaffenheit und Dicke ermöglichen;

– auf diese Weise wird eine Mehrzahl von gedruckten Schaltungen geschaffen, welche in sich wiederholenden parallelen Streifen angeordnet sind, wobei jede Schaltung eine Fühlerbahn (12) und zwei Verbindungsbahnen (22) enthält;

– die auf diese Weise erzeugte Schicht (31) wird auf einen ebenen, länglichen Träger (50) aufgebracht, welcher entlang der jeweiligen Grenze zwischen den parallelen Streifen geschnitten wird, um eine Mehrzahl von Sonden zu erhalten.

2. Verfahren nach Anspruch 1, dadurch gekennzeichnet, daß die Fühlerzone (10) aus einer Kobalt-Nickel-Eisen-Legierung besteht, daß die Verbindungszone (20) aus Kupfer besteht und daß die Mischung von chemischen Wirkstoffen Salpetersäure und Eisenperchlorid enthält.

3. Verfahren nach einem der Ansprüche 1 und 2, dadurch gekennzeichnet, daß die Schicht (31) durch Kleben auf den ebenen Träger (50) aufgebracht wird, indem zwischen der Schicht (31) und dem ebenen Träger (50) ein Bindeelement (60), beispielsweise eine Acrylfolie, eingelegt wird.

4. Verfahren nach einem der Ansprüche 1 bis 3, dadurch gekennzeichnet, daß die von dem Substrat (30) getragene Fühlerbahn (12) sich gegenüber einer Ausbuchtung (80) des ebenen Trägers (50) befindet.

5. Verfahren nach einem der Ansprüche 1 bis 4, dadurch gekennzeichnet, daß die Fühlerbahn (12) und die Verbindungsbahnen (22) mittels aufgeschweißter Elemente (40) verbunden werden.

6. Sonde zur Pegelmessung einer in einem Behälter enthaltenen Flüssigkeit mit einem Fühlerelement, welches durch einen Leiter mit starkem Temperaturkoeffizienten zum Eintauchen in die Flüssigkeit und durch elektrische Verbindungselemente, welche die Verbindung zwischen dem Fühlerelement und einem (Steck-)Verbinder ermöglichen, gebildet ist, dadurch gekennzeichnet, daß sie einen ebenen, länglichen Träger (50) aufweist, auf welchem eine gedruckte Schichtschaltung (31) befestigt ist, welche auf ein und demselben isolierenden Substrat (30) Bahnen von zwei Materialien aufweist, wovon das eine einen starken Temperaturkoeffizienten besitzt, um jeweils das Fühlerelement (12) und die elektrischen Verbindungselemente (22) der Sonde zu bilden, wobei der Träger (52) und die Schicht (31) in diesem Bereich einen Bogen (51) und eine Saite (32) bilden, um so jede thermische Beeinflussung zwischen dem Träger (52) oder einem eventuell durch Kapillarwirkung zwischen dem Bogen (51) und der Saite (32) gehaltenen Flüssigkeitstropfen und dem Fühlerelement (12) auszuschalten.

7. Sonde nach Anspruch 6, dadurch gekennzeichnet, daß die Saite (32) am unteren Teil der Sonde mit einer Platte (91) und einem Niet (92) am Bogen (51) befestigt ist.

## Claims

1. A method of manufacturing a probe for the level of a liquid contained in a reservoir of the type having a detector element constituted by a conductor having a high coefficient of temperature and electrical connection means for connecting of said detector element to a connector, characterized by the steps of:

associating to a single insulating substrate (30) two adjacent conducting layers of different materials, one having a high coefficient of temperature, for forming a detecting zone (10) and a connection zone (20);

etching simultaneously said two zones (10, 20) in order to obtain tracks (12, 22) of printed circuit with the aid of a mixture of chemical agents, the proportions and concentrations of these chemical agents permitting adjustment of the speeds of etching of each said zone (10, 20) as a function of their composition and thickness;

providing in this manner a plurality of printed circuit disposed in respective parallel strips, each said circuit having a detecting track (12) and two electrical connection tracks (22); and

assembling the thus produced film (31) onto a flat elongated support (50), and cutting it at the edge of said parallel strips to obtain a plurality of probes.

2. A method according to claim 1, characterized in that said detecting zone (10) is of a cobalt-nickel-iron alloy;

said connection zone (20) is of copper; and

said mixture of chemical agents comprises nitric acid and iron chloride.

3. A method according to claim 1, characterized in that said film (31) is assembled onto said flat support (50) by glueing in inter-position between said film (31) and said support of a bonding element (60) such as an acrylic layer.

4. A method according to one of the claims 1 to 3, characterized in that said detecting track (12) supported by said insulating substrate (30) is placed opposite a groove (80) of said insulating flat support (50).

5. A method according to one of the claims 1 to 4, characterized in that said detecting track (12) and said connection tracks (22) are bound together through soldered means.

6. A level measuring probe for a liquid contained in a reservoir of the type having a detecting element constituted by a conductor having a high coefficient of temperature intended to be immersed in the liquid and electrical connection means permitting connection between said detecting element and a connector, characterized in that it comprises: an elongated flat support (50) on which a printed circuit film (31) incorporating on a single insulating substrate (30) tracks of two materials, one having a high coefficient of temperature, for forming respectively said detecting element (12) and means (22) for electrical connection of the probe, said support (52), in its part situated opposite the detecting element (12) having a groove (80), the support (52) and the film (31) forming respectively at this level a bow (51) and a cord (32), this being to avoid all thermal effects between said support (52), or a possible drop of liquid held by capillary action between said bow (51) and said cord (32), and said detecting element (12).

7. A probe according to claim 6, characterized in that said cord (32) is at the lower part of said probe and fixed to said bow (51) by a plate (91) and a rivet (92).

FIG_1

FIG_2

FIG_3

FIG_4